# EUROPÄISCHE PATENTSCHRIFT

(11) **EP 2 570 199 B1**
(45) Veröffentlichungstag und Bekanntmachung des Hinweises auf die Patenterteilung: **10.05.2017**
(21) Anmeldenummer: 11181013.1
(22) Anmeldetag: 13.09.2011
(51) Int. Cl.: B08B 7/00, B23Q 11/02, B08B 1/00, B08B 1/04, B23B 5/16, B23K 11/30

(54) **VORRICHTUNG MIT REINIGUNGSEINHEIT ZUM BEFRÄSEN DES SCHWEISSBEREICHS VON PUNKT-SCHWEISS-ELEKTRODEN**
DEVICE FOR MACHINING THE WELDING AREA OF SPOT WELDING ELECTRODES COMPRISING CLEANING MEANS
DISPOSITIF DE FRAISAGE DE LA ZONE DE SOUDAGE D'ÉLECTRODES SOUDÉES PAR POINTS COMPRENANT DES MOYENS DE NETTOYAGE

(43) Veröffentlichungstag der Anmeldung: 20.03.2013
(73) Patentinhaber: Lutz Precision, K.S., 821 09 Bratislava (SK)
(72) Erfinder: Fahnenstich, Stefan, 82216 Maisach (DE)
(74) Vertreter: Grünecker Patent- und Rechtsanwälte PartG mbB

(56) Entgegenhaltungen:
- EP-A1- 0 023 984
- WO-A1-97/44153
- JP-A- 59 037 031
- JP-A- 62 244 573

## Beschreibung

Die Erfindung betrifft eine Vorrichtung zum Befräsen des Schweißbereichs von Punkt-Schweiß-Elektroden, nach dem Oberbegriff des Patentanspruchs 1 sowie ein Verfahren zur Reinigung einer Vorrichtung zum Kappenfräsen nach dem Oberbegriff des Patentanspruchs 10.

Widerstandspunktschweißen, nachfolgend Elektroden-Punkt-Schweißen, wird zur Verbindung von Stahlblechen insbesondere in der Automobilindustrie und im Karosserie- und Fahrzeugbau verwendet. Häufig werden die zu verpunktenden Karosseriebleche mit Hilfe von Roboterschweißzangen miteinander verschweißt. Dabei muss der Verschleiß der Punkt-Schweiß-Elektroden, nachfolgend kurz als Elektroden bezeichnet, berücksichtigt werden. Nach einer gewissen Anzahl von Schweißvorgängen sind Abbrand und Oxidschichten, welche sich beim Schweißen an den Elektroden anlagern, derart angewachsen, dass die Elektroden ihren effektiven Querschnitt verändern, und letztlich sich damit ihre elektrothermischen Eigenschaften ändern, was zu einer Verschlechterung der Qualität der Schweißpunkte führen kann. Die Elektroden müssen typischerweise nach einigen zehn bis hundert Schweißvorgängen abgefräst werden, um für weitere Schweißvorgänge benutzt werden zu können. Hierzu werden Vorrichtungen zum Befräsen des Schweißbereichs der Punkt-Schweiß-Elektroden, sogenannte Kappenfräser, benutzt. Die Fräswerkzeuge des Kappenfräsers befräsen den Schweißbereich der Elektroden, sodass diese nach dem Befräsen weiter verwendet werden können.

Im Stand der Technik werden Maßnahmen diskutiert, beim Befräsen von Punkt-Schweiß-Elektroden erzeugte Frässpäne durch Absaugen und/oder Abblasen während des Befräsens zu entfernen. Die WO97/44153 zeigt zum Beispiel eine Fräseinrichtung zum Kappenfräsen von Punkt-Schweiß-Elektroden mit einem Fräswerkzeug mit typischerweise vier Fräskanten. Eine Fräseinrichtung ist dabei durch Absaugkanäle ergänzt, durch die beim Fräsvorgang anfallende Späne abgesaugt werden können. Ferner kann ebenfalls eine Lufteinspritzdüse verwendet werden um im Absaugkanal zusätzlich eine turbulente Luftströmung zu erzeugen und das Absaugen zu unterstützen.

Im Stand der Technik sind jedoch die oben beschriebenen Absaugmaßnahmen stark von der Verwendung von Unterdruckpumpen und Lufteinspritzung abhängig, welches jeweils schwierig handhabbare Geräte erfordert. Bei modernen Arbeitsvorgängen, beispielsweise im Karosseriebau, wird ferner angestrebt, die Verwendung von Druckluft zu reduzieren, da diese ausfallen kann und daher als nicht ausreichend zuverlässig angesehen wird. Angesichts der diskutierten Probleme liegt der vorliegenden Erfindung daher die Aufgabe zugrunde, die beim Befräsen von Punkt-Schweiß-Elektroden verwendeten Vorrichtungen und Werkzeuge, insbesondere Fräswerkzeuge, zu reinigen und dabei den Einsatz von Unterdruckpumpen oder Druckluft möglichst zu reduzieren oder gar ganz zu vermeiden. Diese Aufgabe wird mit einer Vorrichtung mit den Merkmalen des Patentanspruchs 1 sowie mit einem Verfahren mit den Merkmalen des Patentanspruchs 10 gelöst.

Die Erfindung stellt eine Vorrichtung zum Befräsen des Schweißbereichs von Punkt-Schweiß-Elektroden bereit, welche mindestens ein Fräswerkzeug umfasst, mit einer Reinigungseinheit, welche zum Reinigen des Fräswerkzeugs ausgebildet ist, und mindestens ein beweglich ausgebildetes mechanisches Reinigungselement, wie etwa eine Bürste, umfasst. Mit einem beweglich ausgebildeten mechanischen Reinigungselement kann das im Allgemeinen fest stehende Fräswerkzeug gereinigt werden. Ein mechanisches Reinigungselement kann das Fräswerkzeug durch In-Berührung-Bringen des Reinigungselements mit dem Fräswerkzeug reinigen.

In der Vorrichtung wie oben beschrieben umfasst die Reinigungseinheit mehrere Achsen, wodurch das mechanisch ausgebildete Reinigungselement mehrere einer linearen, rotierenden oder schwenkenden Bewegung ausführt. Neben der Beweglichkeit des mechanischen Reinigungselements an sich kann dieses ebenfalls lineare, also translatorische, rotierende oder schwenkende Bewegungen ausführen, welche als Überlagerung oder in Sequenz den Reinigungseffekt deutlich erhöhen können. Durch die Bewegung der Achsen wird das mechanische Reinigungselement also in Bewegung gesetzt und durch das mechanische Bearbeiten, wie etwas Bürsten, werden Schmutzpartikel, insbesondere Kupferabrieb, Öltröpfchen, Kleberabrieb oder Staub von dem zu reinigenden Fräswerkzeug entfernt.

In der erfindungsgemäßen Vorrichtung wie oben beschrieben kann die Reinigungseinheit und/oder können die Achsen der Reinigungseinheit durch eine oder mehrere einer mechanischen, pneumatischen oder elektrischen Komponente angetrieben werden. Dadurch ergibt sich eine große Flexibilität in der Wahl des Antriebs der Reinigungseinheit, wobei berücksichtig werden kann, welche Komponente auch in der Schweißeinheit, welche die Schweißvorgänge ausführt, Anwendung findet.

In der Vorrichtung wie oben beschrieben kann die Reinigungseinheit verschiedene Reinigungselemente umfassen. Dabei können die verschiedenen mechanischen Reinigungselemente zum einen spezielle Bürsten sein, zum Beispiel Rundbürsten oder flexible Bürsten, etwa solche, wo sich die Bürste, also der Bürstenkopf, nicht nur ihre Borsten, flexibel bewegen können; ferner können als Reinigungselemente auch Lappen und Wischer verwendet werden. Entsprechend des Typs der verwendeten Reinigungselemente fallen die beim Reinigungsvorgang abgeriebenen, also entfernten Partikel durch das Fräswerkzeug hindurch oder von ihm ab oder haften auf den Reinigungskörpern, insbesondere Lappen und Wischer.

Insbesondere zum Auffangen von abgeriebenen, das heißt entfernten Partikeln, kann die Vorrichtung wie oben beschrieben weiterhin eine Auffangeinheit oder Auffangvorrichtung umfassen. Mit der Auffangeinheit werden die bei der Reinigung abgeriebenen und typischerweise durch die Schwerkraft herunterfallenden Schmutzpartikel aufgefangen. Eine derartige Auffangeinheit kann beispielsweise mit einer herausnehmbaren Kassette zum Auffangen der Partikel verbunden sein, oder die Auffangeinheit selber kann in geeigneter Weise von der Reinigungseinheit beziehungsweise der Fräsvorrichtung lösbar ausgebildet sein. Gleichzeitig können dadurch die im Zuge des Reinigungsvorgangs abgeriebenen Schmutzpartikel gesammelt werden und lokalisiert aufgefangen werden.

In der oben beschriebenen Vorrichtung kann die Reinigungseinheit ferner dazu ausgebildet sein, Karkassen, Schneiden, Schweißzangen, Pinolen, Elektrodenhalter der Vorrichtung und des Fräswerkzeugs oder auch Anlötschaft des Schweißgeräts zu reinigen. Es können also weitere Teile der Vorrichtung neben dem Fräswerkzeug durch die Reinigungseinheit mit geeigneten Bürsten oder Reinigungselementen wie Lappen oder Wischer gereinigt werden.

Die erfindungsgemäße Vorrichtung kann ferner eine Abdeckung oder ein Gehäuse für die Reinigungseinrichtung umfassen wobei Abdeckung oder Gehäuse derart ausgebildet sind die Umgebung während des Reinigungsprozesses vor den entfernten Partikeln zu schützen. Es wird also insbesondere der Aspekt betont, dass die entfernten, also abgeriebenen Partikel von der Umgebung durch eine Abdeckung oder ein Gehäuse abgeschirmt werden können, das heißt Abdeckung oder Gehäuse sind als eine Abschirmung zu verstehen. Die Abdeckung, Gehäuse oder Abschirmung sind gemeinsam mit der Auffangeinheit zu betrachten, und lokalisieren die abgeriebenen und entfernten Partikel. Dabei können Abdeckung und Gehäuse oder Abschirmung derart ausgebildet sein, dass sie abnehmbar oder aufklappbar oder schwenkbar am Gehäuse für die Reinigungseinheit beziehungsweise am Gehäuse der Vorrichtung angebracht beziehungsweise ausgebildet sind.

Die Erfindung stellt ferner ein Verfahren zur Reinigung einer Vorrichtung zum Kappenfräsen bereit, welches umfasst: in Berührung bringen von mindestens einem mechanischen Reinigungselement einer Reinigungseinheit mit der Fräswerkzeug der Vorrichtung, wobei das mindestens eine mechanische Reinigungselement zum Reinigen des Fräswerkzeugs beweglich ausgebildet ist. Das Verfahren reinigt also das Fräswerkzeug mit Hilfe eines mechanische ausgebildeten Reinigungselements, wie etwa einer Bürste, das beweglich ausgebildet ist, wobei das Reinigen vor oder nach dem Kappenfräsen mit Hilfe des Werkzeugs geschieht. Dabei ist es möglich, den Reinigungsprozess in einer Automatisierungskette zu integrieren und nach einer bestimmten Zeit von Fräsvorgängen zum Beispiel nach oder vor jedem Fräsvorgang oder in größeren Intervallen, ein oder mehrere mechanische Reinigungselemente der Reinigungseinheit mit dem Fräswerkzeug in Berührung zu bringen, um dieses geeignet zu reinigen. Dabei kann beispielsweise wenn zwei Fräswerkzeuge oder mehrere Fräswerkzeuge nebeneinander vorhanden sind, eines gereinigt werden während ein weiteres zum Befräsen verwendet wird.

Ferner umfasst das Verfahren das Bewegen des mechanischen Reinigungselements, wie etwa der Bürste, in mehreren von einer linearen, rotierenden oder schwenkenden Bewegung. Insbesondere, da das Fräswerkzeug in einem Halter geeignet gehaltert werden kann, in dem das Fräswerkzeug rotieren kann und die Position des Fräswerkzeugs damit feststeht, kann das Bewegen des mechanischen Reinigungselements flexibel sein. Beim Bewegen könne räumliche Anpassbarkeit und Ausrichtung sowie Orientierung des mechanischen Reinigungselements genutzt werden, und ebenso das Anschmiegen des mechanischen Reinigungselements bei einem leichten Andrücken. Das Verfahren kann also eine Kombination oder Sequenz von mehreren Bewegungen des mechanischen Reinigungselements zur Reinigung umfassen kann.

Das Verfahren wie oben beschrieben umfasst insbesondere das Bewegen der Bürste um mehrere Achsen der Reinigungseinheit. Die Bewegung der Bürste in linearer, rotierender oder schwenkender Bewegung können also mit Hilfe von mehreren Achsen entkoppelt werden sodass das Bewegen der Bürste besonders effizient erfolgen kann. Ferner kann das Antreiben der Reinigungseinheit innerhalb des obigen Verfahrens und/oder der Achsen der Reinigungseinheit durch eine oder mehrere einer mechanischen, pneumatischen oder elektrischen Komponente erfolgen.

Ferner kann das erfindungsgemäße Verfahren das Abdecken oder Umfangen der Reinigungseinheit während des Reinigens der Vorrichtung zum Kappenfräsen umfassen, es handelt sich dabei also um das Abschirmen von zumindest Teilen der Umgebung von eventuell sich durch die Luft bewegenden Partikeln, die während des Reinigens abgerieben werden, was zusätzlich kombiniert werden kann mit dem Auffangen der durch die Schwerkraft herunterfallenden Partikel.

Das Verfahren kann ferner das Reinigen von Karkassen, Schneiden, Schweißzangen, Pinolen, Elektrodenhaltern oder Anlötschacht der Vorrichtung und des Fräswerkzeugs umfassen.

Der Erfindungsgegenstand wird anhand der nachfolgenden Zeichnung beispielhaft erläutert. Es zeigen:
- Figur 1A:: Fräseinsatz mit vier Fräskanten mit Fräsmessern, speichenartig angeordnet.
- Figur 1B:: Fräseinsatz mit zwei Aufnahmepfannen zum Befräsen von zwei Elektroden.
- Figur 1C:: Werkzeugträger mit Fräseinsatz sowie Gehäuseteilen.
- Figur 2A:: Werkzeugträger mit Fräseinsatz und Reinigungseinheit zum Reinigen gemäß der vorliegenden Erfindung.
- Figur 2B:: Bewegliche Bürste einer Reinigungseinheit gemäß der vorliegenden Erfindung.
- Figur 3:: Reinigungseinheit zum Reinigen eines Fräswerkzeugs mit an einer Achse ausgebildeter Bürste und Werkzeugträger mit Fräswerkzeug entsprechend der vorliegenden Erfindung.
- Figur 4:: Reinigungseinheit in einer weiteren Weiterbildung mit einer Bürste und mit einer Abschirmung.

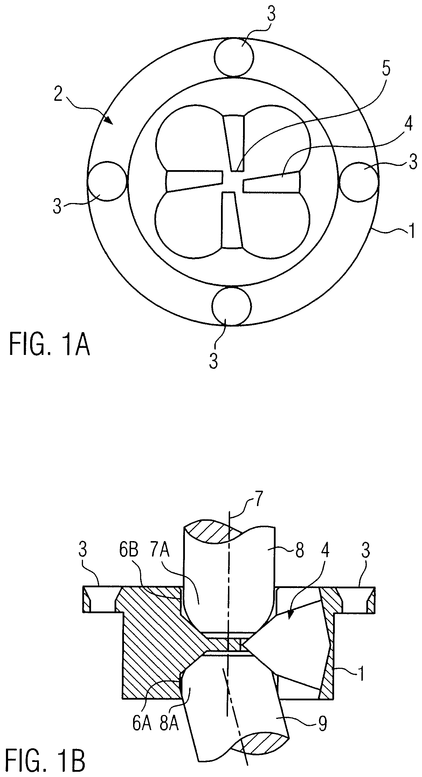

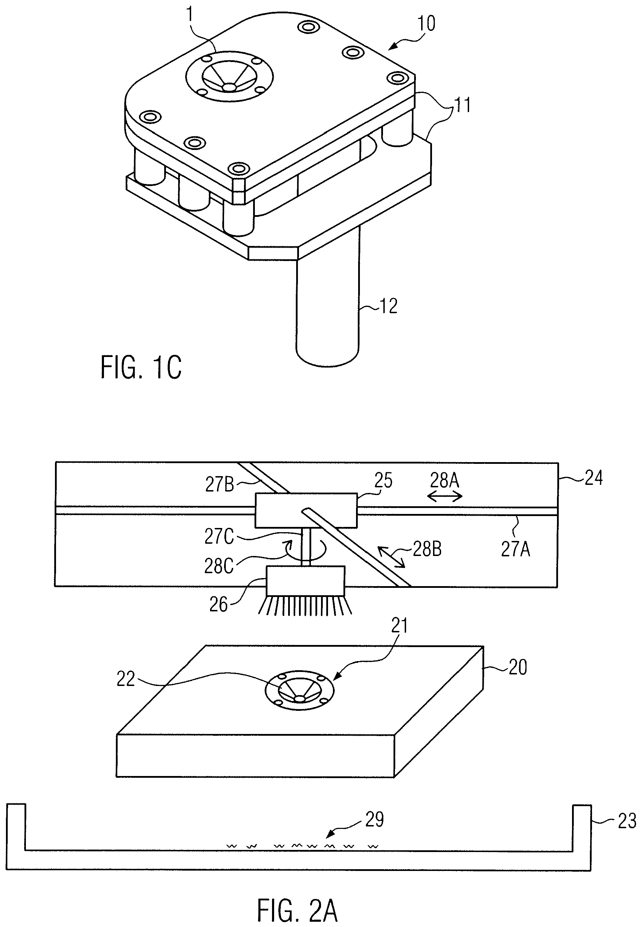

Figur 1A zeigt einen Fräseinsatz 1 wie er im Stand der Technik bekannt ist. Derartige Fräseinsätze können eine oder mehrere Fräskanten mit Fräsmessern 4 besitzen. Im vorliegenden Fall sind vier Fräskanten mit Fräsmessern 4 speichenartig im Inneren Bereich 5 des Fräseinsatzes 1 angeordnet dargestellt. Der Fräseinsatz 1 besitzt einen Ringkörper 2 mit Befestigungslöchern 3, im vorliegenden Fall vier Befestigungslöcher, mit denen der Fräseinsatz in einem Werkzeugträger, siehe unten, befestigt werden kann. Vorteilhaft kann dabei die speichenartige, also offene Anbringung 5 der Fräsmesser an den Fräskanten 4 sein, die auf beiden Seiten geschehen kann, also in der Perspektive von Figur 1 oberhalb und unterhalb des Ringkörpers 2, wodurch die abgefrästen Späne durch den Fräsansatz hindurch fallen können.

Figur 1B zeigt einen entsprechenden Fräseinsatz 1 wie in Figur 1 a dargestellt, hier jedoch beispielhaft mit nur einem Fräsmesser 4 gezeigt, das symmetrisch ausgebildet ist, sodass die durch Aufnahmepfannen 6a und 6b geführten Elektroden 8 und 9 die beispielsweise an einer Roboterschweißzange angebracht sind, durch den Fräseinsatz 1 also das Fräswerkzeug befräst werden können. Das Fräswerkzeug, also der Fräseinsatz 1 ist geeignet befestigt in einem hier nicht gezeigten weiteren Halter, in dem der Fräseinsatz entsprechend rotieren kann, und zwar typischerweise um die entsprechenden Drehachsen 7 wie angedeutet. Die zu befräsenden Bereiche der Elektroden sind also die Bereiche 7a und 8a.

Figur 1C zeigt beispielhaft einen Werkzeugträger 10 mit Gehäuseteilen 11 und einem Getriebeteil 12, in dem ein Fräseinsatz 1 als Fräswerkzeug eingelassen ist, wie im Stand der Technik bekannt.

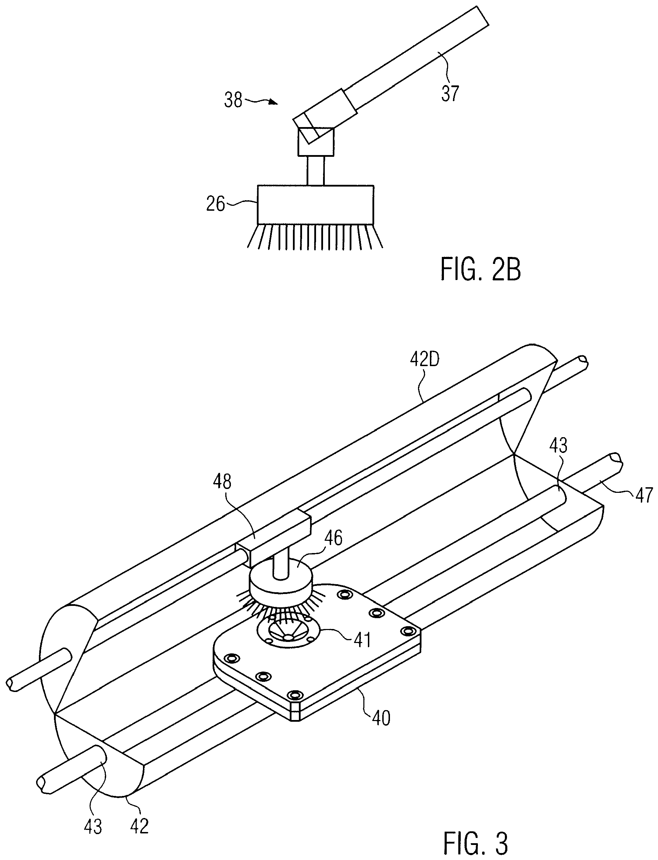

Figur 2A zeigt eine erfindungsgemäße Vorrichtung mit einer Reinigungseinheit 24, die zur Reinigung des Fräswerkzeugs 21 ausgebildet ist, welches ähnlich dem oben beschriebenen Fräswerkzeug ist, und Fräsmesser 22 besitzt, und in einem Werkzeugträger 20 gehaltert werden. Die Reinigungseinheit 24 umfasst insbesondere mindestens eine flexible Bürste 26, wobei auch oder stattdessen andere Reinigungselemente wie Wischer oder Lappen, hier nicht gezeigt, zum Einsatz kommen können. Die Bürste 26 ist an einer Welle 27c angebracht und ist ferner beweglich über weitere Achsen oder Wellen 27a und 27b, welche zum Beispiel eine Bewegung entlang der Pfeile 28a und 28b der Bürste zulassen können, wobei diese Bewegungen mit einem geeigneten Schneckengewinde, hier nicht gezeigt, oder einer Elektromotorsteuerung, hier nicht gezeigt, geschehen können. Entsprechend kann die Bürste entlang der Welle 27c ebenfalls geeignet höhenverstellbar sein, sodass sie auf das Werkzeug abgesenkt werden kann. Mit der Bewegungsrichtung 28c wird die Rotationsbewegung der Bürste dargestellt, dazu kann ebenfalls in der Antriebseinheit 25 ein Schwenkmechanismus vorgesehen sein sodass die Bürste 26 an einem in der Antriebseinheit oder in der Nähe der Antriebseinheit 25 ausgebildeten Schwenkgelenk schwenkbar ist. Entsprechend ist die Bürste 26, sowie weitere hier nicht gezeigte Reinigungselemente, flexibel an die Reinigung des Fräswerkzeugs 21, welches vom Werkzeugträger 20 gehaltert wird, angepasst beziehungsweise anpassbar. Ferner ist in Figur 2 eine Auffangeinheit 23 der erfindungsgemäßen Vorrichtung gezeigt, wobei die Auffangeinheit 23 typischerweise unterhalb der Reinigungseinheit 24 beziehungsweise des zu reinigenden Bereiches des Fräswerkzeugs 21 und seines Halters 20 und weiterer Teile der erfindungsgemäßen Vorrichtung angebracht wird, wodurch typischerweise Partikel 29, die im Zuge der Reinigung herunterfallen, aufgefangen werden können. Die Auffangeinheit 23 kann beispielsweise breiter/weiter als das Fräswerkzeug 21 samt seinem Halter 20 ausgebildet sein, zum Beispiel kann die Auffangeinheit die doppelte oder dreifache Weite des Halters 20 haben, wobei auch andere Weiten möglich sind. Die Auffangeinheit kann sogar weiter als die Reinigungseinheit ausgebildet sein. Die in Figur 2 gezeigte Auffangeinheit 23 ist kastenförmig ausgebildet mit Seitenwänden, deren Höhe deutlich niedriger ist, etwa nur 1/5 bis 1/10 der Weite der Auffangeinheit. Ebenso ist es aber möglich, dass die Auffangeinheit nicht kastenförmig, sondern wannenförmig ausgebildet ist, hier nicht gezeigt, das heißt der Übergang vom Boden der Auffangeinheit zu den Seitenwänden geschieht durch eine Rundung.

Im Hinblick auf die erfindungsgemäße Vorrichtung mit der Reinigungseinheit, wie in Bezug auf Figur 2A beschrieben, kann sich das mechanische Reinigungselement, wie etwa die Bürste 26, sowie gegebenenfalls weitere, hier nicht gezeigte Reinigungselemente bewegen. Hierzu kann, wie in Figur 2B gezeigt, insbesondere die Bürste 26 - wie hier dargestellt - ein Kreuzgelenk 38 an einer entsprechenden Achse oder Welle 37 besitzen, wie sie im Rahmen der Reinigungseinheit 24 der Vorrichtung wie in Figur 2A und 2B beschrieben, eingesetzt werden kann.

Im Hinblick auf eine weitere Abschirmung des Reinigungsvorgangs zeigt Figur 3 eine Abdeckung, Gehäuse oder Abschirmung 42 der vorliegenden Erfindung, welche einen klappbaren Deckel 42d besitzt und ein Reinigungselement 46, hier als Bürste gezeigt, die der in Figur 2A beschriebenen Bürste 26 entsprechen kann, wobei hier beispielhaft nur eine Achse 43 gezeigt ist aber es sich versteht, dass diese Ausführungsform auch mehrere Achsen umfassen kann. Der Werkzeugträger 40 fasst, beispielhaft gezeigt, einen Fräseinsatz 41, wobei mehrere Fräseinsätze selbstverständlich möglich sind. Das zu reinigende Fräswerkzeug 41 wird dadurch geeignet gehaltert, die Bürste 46 wird eingesetzt und kann sich mindestens entlang der Achse 47 geeignet bewegen und durch eine weitere, hier nicht gezeigte, Achse geeignet rotieren oder schwenken, sodass das Fräswerkzeug geeignet gereinigt wird. Dabei können die Abdeckung beziehungsweise Abschirmung als Gehäuse ausgebildet werden, welches mit dem Deckel 42 weitestgehend abdeckbar ist und die beim Reinigen herunterfallenden Schmutzpartikel aufnehmen kann.

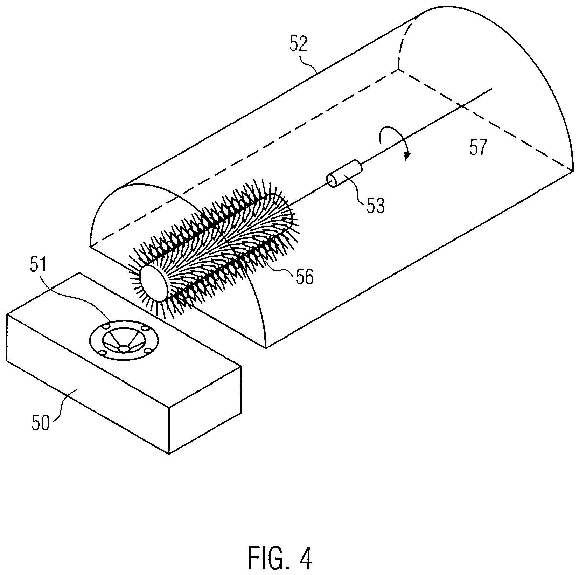

Figur 4 zeigt eine weitere Weiterbildung einer Reinigungseinheit wie oben beschrieben. Dabei kann ein Fräswerkzeug 51 mit einem länglichen, beweglichen Reinigungselement in Form einer länglichen Bürste 56 gereinigt werden. Das Fräswerkzeug 51 und sein Halter 50 ähneln den Fräswerkzeugen und Haltern wie in Figuren 2A, 2B und 3 beschrieben. Die längliche Bürste ist an einer Welle oder Achse 57 befestigt. Die Welle 57 kann sich beispielsweise drehen, wie in Figur 4 angedeutet. An einem Gelenk 53 kann die Bürste 56 befestigt sein, insbesondere kann hier auch ein Knick vorhanden sein. Die Bürste 56 hat einen länglichen Kopf mit Borsten wie in Figur 4 gezeigt. Eine Abschirmung 52 kann über die Bürste 56, die zwecks Reinigung des Fräswerkzeugs rotieren kann, gebracht werden, wodurch das Umherfliegen von abgeriebenen Partikeln, hier nicht gezeichnet, kontrolliert werden kann.

## Patentansprüche

1. Vorrichtung zum Befräsen des Schweißbereichs von Punkt-Schweiß-Elektroden (8, 9), umfassend:
mindestens ein Fräswerkzeug (21, 41, 51);
eine Reinigungseinheit (24), welche zum Reinigen des Fräswerkzeugs (21, 41, 51) ausgebildet ist, umfassend mindestens ein beweglich ausgebildetes mechanisches Reinigungselement (26, 46, 56), wie etwa eine Bürste (26, 46, 56); **dadurch gekennzeichnet, dass**
die Reinigungseinheit (24) mehrere Achsen umfasst, wodurch das mechanische Reinigungselement (26, 46, 56) mehrere einer linearen, rotierenden oder schwenkenden Bewegung ausführt.

2. Vorrichtung nach Anspruch 1, wobei Reinigungseinheit (24) und/oder die Achsen der Reinigungseinheit (24) durch eine oder mehrere einer mechanischen, pneumatischen oder elektrischen Komponente angetrieben werden.

3. Vorrichtung nach Ansprüchen 1 - 2, wobei die Reinigungseinheit (24) verschiedene mechanische Reinigungselemente (26, 46, 56) umfasst.

4. Vorrichtung nach Ansprüchen 1 - 3, wobei die mechanischen Reinigungselemente (26, 46, 56) der Reinigungseinheit (24) insbesondere Rundbürsten oder flexible Bürsten sind und wobei die Reinigungseinheit (24) ferner Lappen und Wischer umfasst.

5. Vorrichtung nach Ansprüchen 1 - 4, wobei die Reinigungseinheit (24) mittels einer lösbaren Befestigungseinrichtung (20, 40, 50) gehaltert wird, welche an einem Bauteil wie etwa einem Getriebe oder einem Gehäuseteil des Kappenfräsers befestigt ist.

6. Vorrichtung nach Ansprüchen 1 - 5, mit einer Auffangeinheit (23) für bei der Reinigung abgeriebene Partikel.

7. Vorrichtung nach Ansprüchen 1 - 6, wobei die Reinigungseinheit (24) ferner dazu ausgebildet ist, Karkassen, Schneiden, Schweißzangen, Pinolen, sowie Elektrodenhalter der Vorrichtung und des Fräswerkzeugs (21, 41, 51) zu reinigen.

8. Vorrichtung nach Ansprüchen 1 - 7, ferner mit einer Abdeckung oder einem Gehäuse für die Reinigungseinrichtung, wobei die Abdeckung oder das Gehäuse ausgebildet sind, während des Reinigungsprozesses die Umgebung vor entfernten Partikeln zu schützen.

9. Verfahren zur Reinigung einer Vorrichtung zum Kappenfräsen mit mindestens einem Fräswerkzeug (21, 41, 51) und einer Reinigungseinheit (24), umfassend:
In-Berührung-Bringen von mindestens einem mechanischen Reinigungselement (26, 46, 56) der Reinigungseinheit (24) mit dem Fräswerkzeug (21, 41, 51), wobei das mindestens eine mechanische Reinigungselement (26, 46, 56) zum Reinigen des Fräswerkzeugs (21, 41, 51) beweglich ausgebildet ist; **gekennzeichnet durch**
Bewegen des mechanischen Reinigungselementes (26, 46, 56) in mehreren von einer linearen, rotierenden oder schwenkenden Bewegung.

10. Verfahren nach Anspruch 9, wobei das Bewegen des mechanischen Reinigungselementes (26, 46, 56) um eine oder mehrere Achsen der Reinigungseinheit (24) erfolgt:

11. Verfahren nach Ansprüchen 9 - 10, weiterhin umfassend: Antreiben der Reinigungseinheit (24) und/oder der Achsen der Reinigungseinheit (24) durch eine oder mehrere einer mechanischen, pneumatischen oder elektrischen Komponente.

12. Verfahren nach Ansprüchen 9 - 11, ferner umfassend: Abdecken oder Umfangen der Reinigungseinheit (24) während des Reinigens der Vorrichtung zum Kappenfräsen.

13. Verfahren nach Ansprüchen 9 - 12, wobei das Reinigen sich ferner auf Karkassen, Schneiden, Schweißzangen, Pinolen, sowie Elektrodenhalter der Vorrichtung und des Fräswerkzeug (21, 41, 51) erstreckt.

## Claims

1. A device for milling the welding region of spot welding electrodes (8, 9), comprising at least one milling tool (21,41,51);
a cleaning unit (24) configured for cleaning the milling tool (21, 41, 51), comprising at least one movable mechanical cleaning element (26, 46, 56), such as a brush (26, 46, 56)); **characterized in that**
the cleaning unit (24) comprises multiple axes by means of which the mechanical cleaning element (26, 46, 56) executes multiple of a linear, rotating or pivoting movement.

2. The device according to claim 1, wherein the cleaning unit (24) and/or the axes of the cleaning unit (24) are driven by at least one of a mechanical, pneumatic or electric component.

3. The device according to claims 1 - 2, wherein the cleaning unit (24) comprises various mechanical cleaning elements (26, 46, 56).

4. The device according to claims 1 - 3, wherein the mechanical cleaning elements (26, 46, 56) of the cleaning unit (24) are in particular round brushes or flexible brushes and wherein the cleaning unit (24) also comprises cloths or wipers.

5. The device according to claims 1 - 4, wherein the cleaning unit (24) is supported by a detachable fastening device (20, 40, 50), which is fastened to a component such as, for example, a gearing or a housing portion of the tip dresser.

6. The device according to claims 1 - 5, having a collecting unit (23) for the particles that are rubbed off during cleaning.

7. The device according to claims 1 - 6, wherein the cleaning unit (24) is further configured to clean carcasses, cutting edges, welding tongs, quills, as well as electrode holders of the device and of the milling tool (21, 41, 51).

8. The device according to claims 1 - 7, further having a cover or a housing for the cleaning unit (24), wherein the cover or the housing is configured to protect the surroundings from particles removed during the cleaning process.

9. A method for cleaning a device for tip dressing comprising:
bringing at least one mechanical cleaning element (26, 46, 56) of a cleaning unit (24) into contact with the milling tool (21, 41, 51) of the device, wherein the at least one mechanical cleaning tool is movable for cleaning the milling tool (21, 41, 51);
**characterized by**
moving the mechanical cleaning element (26, 46, 56) in multiple of a linear, rotating or swiveling movement.

10. The method according to claim 9, wherein the mechanical cleaning element (26, 46, 56) is moved about one or more axes of the cleaning element (26, 46, 56).

11. The method according to claim 9 - 10, further comprising: driving the cleaning unit (24) and/or the axes of the cleaning unit (24) by means of at least one of a mechanical, pneumatic or electric component.

12. The method according to claims 9 - 11, further comprising: covering or surrounding the cleaning unit (24) during cleaning of the device for tip dressing.

13. The method according to claims 9 - 12, wherein cleaning further extends to carcasses, cutting edges, welding tongs, quills as well as electrode holders of the device and of the milling tool (21, 41, 51).

## Revendications

1. Dispositif pour assurer le fraisage de la zone de soudage d'électrodes de soudage par points (8, 9), comprenant :
au moins un outil de fraisage (21, 41, 51) ;
une unité de nettoyage (24), qui est configurée pour nettoyer l'outil de fraisage (21, 41, 51), et comprend au moins un élément de nettoyage mécanique (26, 46, 56) de configuration mobile, comme par exemple une brosse (26, 46, 56) ;
**caractérisé en ce que**
l'unité de nettoyage (24) comprend plusieurs axes, grâce à quoi l'élément de nettoyage mécanique (26, 46, 56) effectue plusieurs mouvements parmi un mouvement linéaire, rotatif ou de pivotement.

2. Dispositif selon la revendication 1, dans lequel l'unité de nettoyage (24) et/ou les axes de l'unité de nettoyage (24) sont entraînés par un ou plusieurs composants parmi un composant mécanique, pneumatique ou électrique.

3. Dispositif selon les revendications 1 - 2, dans lequel l'unité de nettoyage (24) comprend différents éléments de nettoyage mécaniques (26, 46, 56).

4. Dispositif selon les revendications 1 - 3, dans lequel les éléments de nettoyage mécaniques (26, 46, 56) de l'unité de nettoyage (24) sont notamment des brosses rondes ou des brosses flexibles, et dans lequel l'unité de nettoyage (24) comprend par ailleurs des chiffons de nettoyage et balais d'essuyage.

5. Dispositif selon les revendications 1 - 4, dans lequel l'unité de nettoyage (24) est supportée par un dispositif de fixation démontable (20, 40, 50), qui est fixé sur une pièce constitutive comme par exemple une transmission ou une partie de carter de la fraise de dressage ou de rodage.

6. Dispositif selon les revendications 1 - 5, comprenant une unité de collecte (23) pour des particules d'abrasion provenant du nettoyage.

7. Dispositif selon les revendications 1 - 6, dans lequel l'unité de nettoyage (24) est par ailleurs configurée pour assurer le nettoyage de carcasses, lames de coupe, pinces de soudage, fourreaux d'avance, ainsi que porte-électrodes du dispositif et de l'outil de fraisage (21, 41, 51).

8. Dispositif selon les revendications 1 - 7, comprenant par ailleurs un moyen de recouvrement ou un capotage pour l'unité de nettoyage, et dans lequel le moyen de recouvrement ou le capotage sont configurés pour protéger l'environnement à l'encontre de particules retirées pendant le processus de nettoyage.

9. Procédé destiné au nettoyage d'un dispositif pour assurer le fraisage de dressage ou rodage de bouts d'électrodes avec au moins un outil de fraisage (21, 41, 51) et une unité de nettoyage (24), comprenant :
l'amenée en contact d'au moins un élément de nettoyage mécanique (26, 46, 56) de l'unité de nettoyage (24) avec l'outil de fraisage (21, 41, 51), ledit au moins un élément de nettoyage mécanique (26, 46, 56) étant réalisé mobile pour le nettoyage de l'outil de fraisage (21, 41, 51),
**caractérisé par**
le déplacement de l'élément de nettoyage mécanique (26, 46, 56) selon plusieurs mouvements parmi un mouvement linéaire, rotatif ou de pivotement.

10. Procédé selon la revendication 9, d'après lequel le mouvement de déplacement de l'élément de nettoyage mécanique (26, 46, 56) s'effectue autour d'un ou de plusieurs axes de l'unité de nettoyage (24).

11. Procédé selon les revendications 9 - 10, comprenant par ailleurs : l'entraînement de l'unité de nettoyage (24) et/ou des axes de l'unité de nettoyage (24) par un ou plusieurs composants parmi un composant mécanique, pneumatique ou électrique.

12. Procédé selon les revendications 9 - 11, comprenant par ailleurs : le recouvrement ou le capotage périphérique de l'unité de nettoyage (24) pendant le nettoyage du dispositif pour le fraisage de dressage ou de rodage.

13. Procédé selon les revendications 9 - 12, d'après lequel le nettoyage s'étend par ailleurs à des carcasses, des lames de coupe, des pinces de soudage, des fourreaux d'avance, ainsi que des porte-électrodes du dispositif et de l'outil de fraisage (21, 41, 51).
